Europäisches Patentamt

**European Patent Office**

Office européen des brevets

(11) Publication number : **0 438 910 B1**

# EUROPEAN PATENT SPECIFICATION

(45) Date of publication of patent specification :
**22.02.95 Bulletin 95/08**

(51) Int. Cl.⁶ : **H04N 9/31**

(21) Application number : **90314189.3**

(22) Date of filing : **21.12.90**

(54) **A projection type display apparatus.**

(30) Priority : **21.12.89 JP 333131/89**

(43) Date of publication of application :
**31.07.91 Bulletin 91/31**

(45) Publication of the grant of the patent :
**22.02.95 Bulletin 95/08**

(84) Designated Contracting States :
**DE FR GB NL**

(56) References cited :
**DE-A- 2 829 602
US-A- 3 704 936
US-A- 4 722 593**

(56) References cited :
**PATENT ABSTRACTS OF JAPAN, vol. 8, no. 92
(P-271)[1529], 27th April 1984; & JP-A-59 007
926 (RICOH K.K.) 17-01-1984
PATENT ABSTRACTS OF JAPAN, vol. 13, no.
344 (E-797)[3692], 3rd August 1989; & JP-A-01
103 390 (SEIKO INSTR. & ELECTRON. IND.)
20-04-1989**

(73) Proprietor : **SHARP KABUSHIKI KAISHA
22-22 Nagaike-cho
Abeno-ku
Osaka 545 (JP)**

(72) Inventor : **Hamada, Hiroshi
7-177, Aoyama
Nara-shi, Nara-ken (JP)**

(74) Representative : **Brown, Kenneth Richard et al
R.G.C. Jenkins & Co.
26 Caxton Street
London SW1H 0RJ (GB)**

EP 0 438 910 B1

## Description

## BACKGROUND OF THE INVENTION

### 1. Field of the invention

The present invention relates generally to an image display apparatus, and more particularly to a projection type image display apparatus for displaying a projected image through lenses from a transmissive display device such as a liquid crystal device. See, for example, US-A-4 722 593.

### 2. Description of the prior art

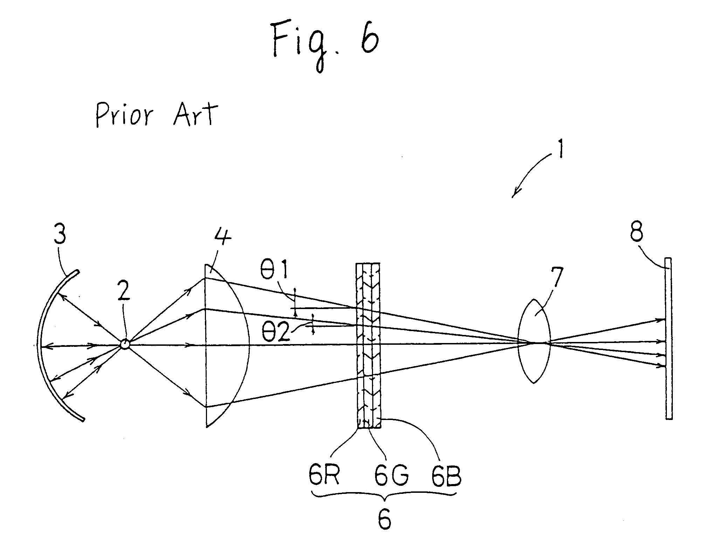

In recent years, projection type display apparatus are widely used to display on large-screen projection televisions, information display systems and the like. Figure 6 illustrates a typical example of such a projection type of display apparatus **1**, hereinafter being referred to as a display apparatus. The display apparatus **1** includes a light source **2** and a reflector lens **3** so that the light from the light source **2** is focused by a condenser lens **4** so as to form an image. A projection lens **7** is disposed adjacent to the image.

A transmissive display device **6** such as a liquid crystal device is disposed between the condenser lens **4** and the projection lens **7**. The display device 6 includes layers which independently control the transmission of red, green and blue. The condenser lens **4** allows the light from the source **2** to enter the display device **6**, and the passing light is then projected into an image on a screen **8**. The reason why the projection lens **7** is located near the image of the light source **2** is to minimize the diameter of the projection lens **7**. This system is called Kohler's illumination".

Since this system has a structure in which the light through the condenser lens **4** is necessarily focused on the condenser lens **7**, the angle of incidence to the display device **6** differs with positions of incidence thereon. In Figure 6 the angles $\theta 1$ and $\theta 2$ have different values. If a plurality of display devices **6R**, **6G** and **6B** are layered as shown in Figure 6, a "parallax" is likely to occur from one display device to another. As a result, the images represented on the respective display devices **6R**, **6G** and **6B** do not connect to each other on a screen **8**, thereby causing chromatic aberration. It is generally explained that this problem is derived from varying projecting magnifications due to different distances between the display devices **6R**, **6G** and **6B** and the projection lens **7**.

In order to solve the problems discussed above, there are proposals, among which Japanese Laid-open Patent Publication 60-2916 discloses a method for irradiating a display panel with parallel light rays. This prior art discloses an optical system under which a liquid crystal panel is irradiated with parallel light rays so as to enable a pair of projection lenses to project an image onto the screen. This known method requires a projection lens having a larger diameter than that of the display panel, thereby resulting in an increased production cost and an increased size. In addition, if this optical system has a projection lens constructed with single lenses, a large chromatic aberration is likely to occur. As a result, some suitable means must be provided so as to obviate the possibility of the chromatic aberration, thereby resulting in an increased size and an increased production cost.

## SUMMARY OF THE INVENTION

The present invention provides a projection type image display apparatus which displays an image on a screen by projecting light rays, the display apparatus comprising:

a transmissive display device comprising an array of pixels;

a light source;

a first optical means situated along an optical axis between the light source and the transmissive display device so as to project the light rays from the light source and enable the principal light rays to enter the transmissive display device in parallel along the optical axis;

a second optical means disposed on an opposite side to the light source with respect to the transmissive display device so as to converge the light rays from the transmissive display device; and

a third optical means disposed in the region of the focal convergence point of the second optical means so as to project an image transmitted through the display device on a screen;

characterised by:

said transmissive display device comprising a plurality of display cells which provide said array of pixels, the display cells being multi-layered in the direction in which light rays are passed through the device, each display cell comprising two substrates disposed on respective sides of a display plane of the cell; and

for each display plane, a degree of out-of-focus (OFD) corresponding to said display plane which is equal to or smaller than a pitch of the pixels of the transmissive display device, the degree of out-of-focus being defined by:

$$OFD = (T/n) \times [(D4/2)/f]$$

where T is a thickness or a total thickness of the substrate or substrates of the transmissive display device between a focal plane of the third optical means in the display device and said display plane, n is a refractive index of the substrate or substrates, D4 is a diameter of an illuminating section of the light source, and f is a focal length of the first optical means.

Thus, the invention described herein makes possible the objects of (1) providing a projection type display apparatus capable of displaying a clear image picture on a screen without the possibility of having an image discontinuity and/or chromatic aberration, and (2) providing a projection type display apparatus of a relatively small and economical size.

## BRIEF DESCRIPTION OF THE DRAWINGS

Figure 1 is a diagrammatic view of an example of the display apparatus according to the present invention;

Figure 2 is a diagrammatic view exemplifying the degree of parallelism of light rays from a light source;

Figure 3 is a diagrammatic view of a second example of the display apparatus according to the present invention;

Figure 4 is a diagrammatic view of a third example of the display apparatus according to the present invention;

Figure 5 is a diagrammatic view of a fourth example of the display apparatus according to the present invention; and

Figure 6 is a diagrammatic view of a typical conventional display apparatus.

## DESCRIPTION OF THE PREFERRED EMBODIMENTS

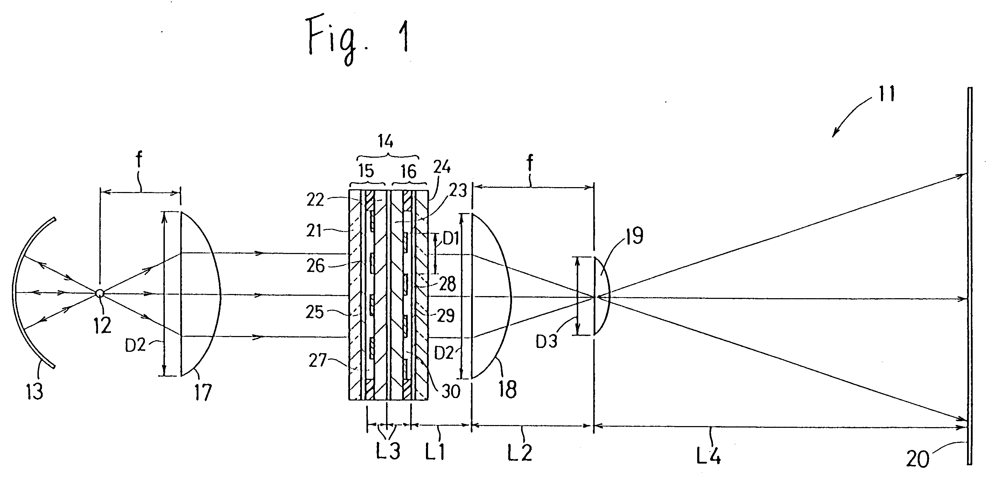

Referring to Figure 1, a display apparatus **11** includes a light source **12** and a reflector mirror **13** (hereinafter referred to as the "reflector") wherein a halogen lamp, a metal halide lamp, or a xenon lamp is employed as the light source **12**. The reflector **13** having a spherical surface reflects light rays from the light source **12** so as to enable the principal light rays to flow toward the display device **14** in parallel with each other through a condenser lens **17** as a first optical means. The light rays passing through the display device **14** are passed through a field lens **18** as a second optical means whereby they are focused on a projection lens **19** as a third optical means located in front of the field lens **18**. The projection lens **19** projects the image of the display device **14** on the screen **20** as a picture. The projection optical means is constructed so as to include the field lens **18** and the projection lens **19**.

The second optical means can be constructed in the form of a double convex lens, a plano-convex lens or a meniscus lens, and it is designed so that the chromatic aberration is minimized as a whole by combining with the third optical means. The second optical means is constructed with a single lens or a complex lens such as achromat or apochromat. The third optical means can be constructed with a usual projection lens for use in an ordinary slide projector or a camera, and where required, a plurality of lenses can be arranged so that the relative positions of them are adjusted so as to work as a zoom lens which has varied synthetic focal lengths.

The display device **14** does not illuminate by itself but has an optical transmissibility varying in response to a driving signal, thereby representing letters and/or pictures by modulating the intensity of an incident light from the light source **12**. The display device **14** can be constructed with a liquid crystal, an electro-chrome, or a transmissive ceramic such as PLZT. The following example uses a liquid crystal.

The liquid crystal panel can be either a simple matrix type or, alternatively, an active matrix type under which a non-linear two-terminal element such as MIM (metal-insulating layer-metal) or three-terminal switching element such as TFT (thin film transistor) is placed. In the illustrated example a pair of liquid crystal panels **15** and **16** of a simple matrix type are employed so as to increase the capacity for display on the simple matrix system. Under the display device of a simple matrix system crosstalk is likely to occur in accordance with an increase in the scanning lines. In the TN mode about 100 scanning lines are a limitation, and in the STN mode 200 scanning lines are a limitation. In this example each of the liquid crystal panels **15** and **16** is provided with half the number of scanning lines required for obtaining an optimum display capacity such that neither liquid crystal panel shares the scanning lines of the other. This increases the capacity for display without reducing contrast.

The liquid crystal panels **15** and **16** are provided with substrates **21** and **22**, and **23** and **24** of a transmissive

EP 0 438 910 B1

material such as glass. In the example, 640 data lines **25** and 200 scanning lines **26** are sandwiched between the substrates **21** and **22**. A super twisted nematic liquid crystal layer **27** is sandwiched between the two groups of lines **25** and **26**. The substrate **22** of liquid crystal panel **15** is located adjacent to the substrate **23** of the display device **16**. Two-hundred scanning lines **28** and 640 data lines **29** are provided, between which a liquid crystal layer **30** of the same material as the liquid crystal layer **27** is sandwiched. The scanning lines **26** and **28** are located such that each group of lines overlap the other group of lines in the direction of the thickness of the display device **14**. The pitch **D1** (picture element pitch) of the scanning lines **26** and **28**, and of the data lines **25** and **29** is 100 μm.

The condenser lens **17** and the field lens **18** are constructed by arranging plano-convex lenses each having a focal length of 200 mm and a diameter **D2** of 100 mm as shown in Figure 1. The projection lens **19** is constructed with a plano-convex lens having a focal length of 200 mm and a diameter **D3** of 40 mm.

The light rays from the light source **12** enter the display device **14** as parallel beams by the reflector **13** and the condenser lens **17**. The incident light is modulated in response to a picture signal input to the liquid crystal panels **15** and **16**. The light rays are directed by the field lens **18** to the projection lens **19**. Suppose that the distance **L1** between the liquid crystal panel **16** and the field lens **18** is 40 mm, and the distance **L2** between the field lens **18** and the projection lens **19** is 200 mm. As a result, a virtual image of the liquid crystal panel **16** is projected through the field lens **18**, and the virtual image is enlarged on the screen **20** five times as large as the size of the liquid crystal panel **16**, wherein the screen **20** is located a distance **L4** (1,000 mm) in front of the projection lens **19**.

If the distance **L2** between the field lens **18** and the projection lens **19** is 170 mm, the virtual image is enlarged at a distance **L4** (for example, 2,200 mm) from the projection lens **19** about 10 times. These distances are those which ensure that the image on the screen **20** is focused. If the distance **L2** is kept 200 mm, the focusing of the image is maintained irrespective of various distances **L1**.

If the image on the screen **20** is focused by the projection lens **19** at a middle point between the layers of the liquid crystal panel **15** and **16** in the direction of thickness, the images of the liquid crystal layers **27** and **30** on the screen **20** become out of focus by the thicknesses of the substrates **22** and **23** (L3 = 1.1 mm).

When the refractive index **n** of each of the substrates **21** to **24** is 1.53, and the thickness **L3** of the substrates 22, 23 is expressed in terms of the distance **L3a** in air, the following equation is established:

$$L3a = L3/n = 1.1/1.53 \fallingdotseq 0.72 \, [mm] \quad (1)$$

In this example the focal depth depends upon the degree of parallelism of the light rays from the light source **12**.

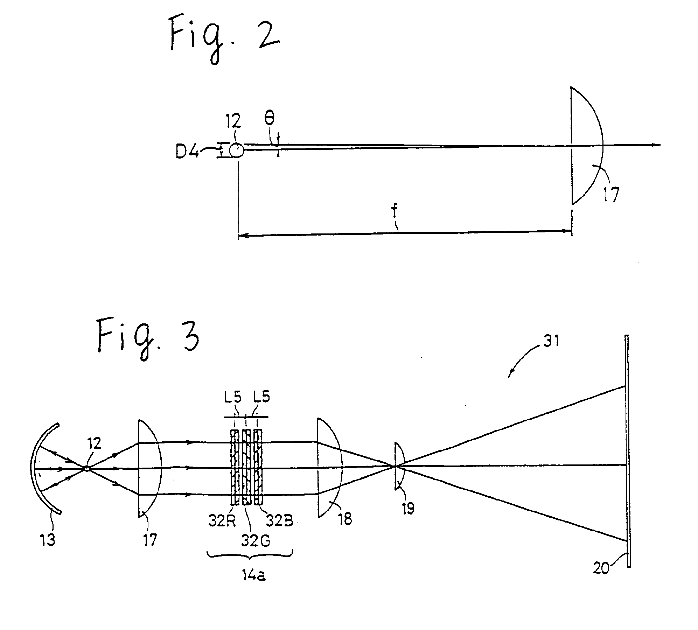

Figure 2 shows the degree of parallelism of the light rays from the light source **12**. Suppose that the illuminating section of the light source **12** has a diameter **D4** of 10 mm, and the condenser lens **17** has a focal length **f** of 200 mm, the degree of parallelism (tan θ) of the light rays from the light source **12** is expressed by:

$$\tan \theta = \pm \left( \frac{D4}{2} \right) / f = \pm \frac{5}{200} = \pm 0.025 \quad \ldots \ldots \ldots \ldots \quad (2)$$

When the focal plane of the projection lens **19** is situated at a point between the liquid crystal panels **15** and **16**, the image of the liquid crystal layers **27** and **30** becomes out of focus expressed as the following formula:

$$0.72 \, [mm] \times 0.025 = 0.018 \, [mm] \quad (3)$$

It is ascertained that this out-of-focus condition is negligible for viewers who view the image picture on the screen **20**.

In contrast, when the field lens **18** was removed from the structure shown in Figure 1, and projection was carried out only through a plano-convex lens having a focal length of 200 mm and a diameter of 100 mm, a large chromatic aberration occurred. Under the present invention the light rays from the light source **12** are arranged so as to enable the principal rays to enter the display device **14** in parallel. As a result, the above-discussed detrimental discontinuity of the image due to the magnifications differing with the liquid crystal panels is avoided, thereby enhancing the quality of the image picture on the screen.

Referring to Figure 3, a modified version of the display apparatus **31** will be described, wherein like numerals refer to like and corresponding parts in the first example:

A striking feature of this example is that a display device **14a** includes three liquid crystal panels **32R**, **32G** and **32B**, each of which can have the same structure as that of the liquid crystal panel **15**, or, alternatively, can be a single three-layered structure in which the laminated layers are separated by transmissive substrates.

The display apparatus **31** is designed to display a chromatic image, and the liquid crystal panels **32R**, **32G**

4

and **32B** change the transmission of light components corresponding to red, green and blue so as to display a chromatic image. In addition, dichromatic pigments are dissolved in the respective liquid crystal panels **32R**, **32G** and **32B** so as to control the molecular orientation by voltage. In this way the absorbency of light components corresponding to red, green and blue is controllable. This system is commonly called the "Guest Host Mode", hereinafter referred to as "GH Mode". It is preferable to incorporate this GH Mode in this example.

Under the GH Mode, in order to secure an optimum brilliancy of an image picture on the screen **20**, it is preferable that the light rays are not absorbed if they have wavelengths out of the range in which absorbency is controlled. This means that the pigments used become complementary colors for the controlled colors. More specifically, if liquid crystal panels **32R**, **32G** and **32B** are to control red, green and blue, color agents of cyan, magenta and yellow are used. In controlling the red color component from minimum to maximum, the liquid crystal panel **32R** using the cyan color agent changes between cyan and clear.

Preferably the liquid crystal panel **32G** containing the magenta pigment for controlling the green light is situated between the liquid crystal panels **32R** and **32B**. This is based on the accepted observation that the human eye has the highest sensitivity and space resolving power to green. Consequently, the focus is placed in the liquid crystal panel **32G** situated between the other two panels **32R** and **32B**, thereby intensifying the visual resolving power of the human eye.

Dimensions of components of the display device **14a** are as follows:

The diagonal length of the display screen is 75 mm, and the pixel pitch is 190 μm (longitudinal)x 161 μm (lateral), the pixel area 88 μm (longitudinal)x 104 μm (lateral), and the porosity is 30%. The liquid crystal panels **32R**, **32G** and **32B** have the same structure as that of the liquid crystal panel **15** in the first example, and the distances **L5** between the adjacent two panels 32 are equal to the thickness of the combined two substrates **21** and **24** in Figure 1, that is:

$$1.1 \text{ [mm] x } 2/1.53 \doteqdot 1.44 \text{ [mm]} \quad (4)$$

If the degree of parallelism of the light from the light source **12** is determined to be equal to that of the first example, the out-of-focus condition occurs in each of the liquid crystal panels **32R** and **32B**, whose degree is expressed by:

$$1.44 \text{ [mm] x } 0.025 = 0.036 \text{ [mm]} \quad (5)$$

This degree of out- of-focus is smaller than the pixel pitch mentioned above, and negligible for viewers who view the image picture on the screen.

This example achieves the same effects as those resulting from the first example.

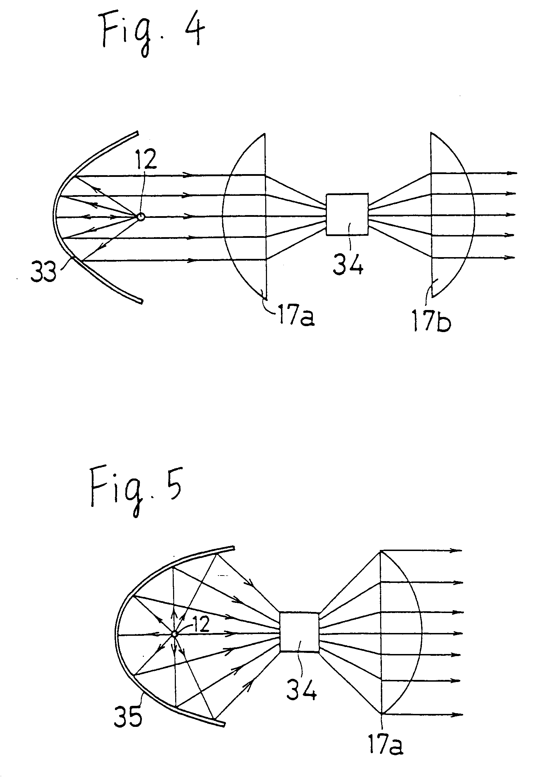

Referring to Figure 4, a further modified example will be described, wherein like numerals refer to like and corresponding parts in the first and second examples:

The main difference from the first and second examples is that the reflector **13** has a rotary parabolic mirror **33** which makes the light rays from the light source **12** parallel. The parallel light rays are converged by a condenser lens **17a**, and an integrator **34** is disposed near the focus where the light rays are converged so as to distribute the light rays evenly. The light rays from the integrator **34** are made parallel by the condenser lens **17b**, and are radiated onto the display devices **14** of the first example or the display device **14a** of the second example. This example achieves the same effects as those of the first and second examples.

Referring to Figure 5, another modified example will be described, wherein like numerals refer to like and corresponding parts in the above-mentioned examples:

A notable feature resides in the provision of a rotary elliptical mirror **35** as the reflector, which converges the light rays from the light source **12** situated at a first focus are converged at a second focus where the integrator **34** is disposed so as to distribute the light rays evenly. The light rays from the integrator **34** are made parallel by the condenser lens **17** and led to the display device 14 or 14a. This example achieves the same effects as those resulting from the above-mentioned examples.

It is understood that various other modifications will be apparent to and can be readily made by those skilled in the art without departing from the scope of this invention as defined by the appended claims.

## Claims

1. A projection type image display apparatus which displays an image on a screen (20) by projecting light rays, the display apparatus comprising:

   a transmissive display device (14) comprising an array of pixels;

   a light source (12, 13);

   a first optical means (17) situated along an optical axis between the light source and the transmissive display device so as to project the light rays from the light source and enable the principal light rays to enter the transmissive display device in parallel along the optical axis;

a second optical means (18) disposed on an opposite side to the light source with respect to the transmissive display device so as to converge the light rays from the transmissive display device; and

a third optical means (19) disposed in the region of the focal convergence point of the second optical means so as to project an image transmitted through the display device on a screen;

characterised by:

said transmissive display device comprising a plurality of display cells (15, 16) which provide said array of pixels, the display cells being multi-layered in the direction in which light rays are passed through the device, each display cell comprising two substrates (21,22; 23,24) disposed on respective sides of a display plane of the cell; and

for each display plane, a degree of out-of-focus OFD corresponding to said display plane which is equal to or smaller than a pitch of the pixels of the transmissive display device, the degree of out-of-focus being defined by:

$$OFD \ = \ (T/n) \times [(D4/2)/f]$$

where T is a thickness or a total thickness of the substrate or substrates of the transmissive display device between a focal plane of the third optical means in the display device and said display plane, n is a refractive index of the substrate or substrates, D4 is a diameter of an illuminating section of the light source, and f is a focal length of the first optical means (17).

2. A projection type image display apparatus according to claim 1, wherein the display cells are simple matrix liquid crystal cells, each of the simple matrix liquid crystal cells being provided with scanning lines, the scanning lines of the cells being staggered with respect to each other.

3. A projection type image display apparatus according to claim 1, wherein the display cells are active matrix liquid crystal cells, each of the active matrix liquid crystal cells being provided with picture element electrodes as display electrodes.

4. A projection type image display apparatus according to claim 1, wherein said display cells of the transmissive display device comprise three liquid crystal cells.

5. A projection type image display apparatus according to claim 4, wherein the liquid crystal cells change the transmission of light components corresponding to cyan, magenta and yellow, respectively for controlling red, green and blue light color components, respectively.

6. A projection type image display apparatus according to claim 5, wherein the liquid crystal cells are Guest Host Mode type.

7. A projection type image display apparatus according to claim 5 or claim 6, wherein a middle one of the three liquid crystal cells contains magenta pigment for controlling a green light component, the third optical means having said focal plane located at said display plane of the middle liquid crystal cell.

**Patentansprüche**

1. Projektions-Bildanzeigegerät, das durch Einstrahlen von Lichtstrahlen ein Bild auf einem Schirm (20) anzeigt und das folgendes aufweist:
   - eine lichtdurchlässige Anzeigevorrichtung (14) mit einer Pixelanordnung;
   - eine Lichtquelle (12, 13);
   - eine erste optische Einrichtung (17), die entlang einer optischen Achse zwischen der Lichtquelle und der lichtdurchlässigen Anzeigevorrichtung so angeordnet ist, daß sie die Lichtstrahlen von der Lichtquelle projiziert und es ermöglicht, daß die Hauptlichtstrahlen parallel zur optischen Achse in die lichtdurchlässige Anzeigevorrichtung eintreten;
   - eine zweite optische Einrichtung (18), die an der der Lichtquelle gegenüberliegenden Seite der lichtdurchlässigen Anzeigevorrichtung so angeordnet ist, daß sie die Lichtstrahlen von der lichtdurchlässigen Anzeigevorrichtung konvergiert; und
   - eine dritte optische Einrichtung (19), die im Bereich des Brenn- und Konvergenzpunkts der zweiten optischen Einrichtung so angeordnet ist, daß sie das durch die Anzeigevorrichtung übertragene Bild auf einen Schirm projiziert;
   **dadurch gekennzeichnet,** daß
   - die lichtdurchlässige Anzeigevorrichtung mehrere Anzeigezellen (15, 16) aufweist, die die Pixelanordnung bilden und die in der Richtung, in der die Lichtstrahlen durch die Vorrichtung laufen, mehrere Schichten aufweisen, wobei jede Anzeigezelle zwei Substrate (21, 22; 23, 24) aufweist, die auf jeweiligen Seiten einer Anzeigeebene der Zelle angeordnet sind; und

- für jede Anzeigeebene der Defokussierungsgrad OFD, der der Anzeigeebene entspricht und der dem Abstand der Pixel der lichtdurchlässigen Anzeigevorrichtung entspricht oder kleiner ist als dieser, wie folgt definiert ist:

$$OFD = (T/n) \times [(D4/2)/f],$$

wobei T die Dicke des Substrats oder die Gesamtdicke der Substrate der lichtdurchlässigen Anzeigevorrichtung zwischen der Brennebene der dritten optischen Einrichtung in der Anzeigevorrichtung und der Anzeigeebene ist, n der Brechungsindex des Substrats oder der Substrate ist, D4 der Durchmesser des Beleuchtungsabschnitts der Lichtquelle ist, und f die Brennweite der ersten optischen Einrichtung (17) ist.

2. Projektions-Bildanzeigegerät nach Anspruch 1, bei dem die Anzeigezellen Flüssigkristallzellen mit einfacher Matrix sind, wobei jede Flüssigkristallzelle mit einfacher Matrix mit Abrasterleitungen versehen ist, wobei die Abrasterleitungen der Zellen gegeneinander versetzt sind.

3. Projektions-Bildanzeigegerät nach Anspruch 1, bei dem die Anzeigezellen Flüssigkristallzellen mit Aktivmatrix sind, wobei jede Flüssigkristallzelle mit Aktivmatrix mit Bildelementelektroden als Anzeigeelektroden versehen ist.

4. Projektions-Bildanzeigegerät nach Anspruch 1, bei dem die Anzeigezellen der lichtdurchlässigen Anzeigevorrichtung drei Flüssigkristallzellen umfassen.

5. Projektions-Bildanzeigegerät nach Anspruch 4, bei dem die Flüssigkristallzellen die Lichtdurchlässigkeit von Lichtkomponenten ändern, die Zyan, Magenta bzw. Gelb entsprechen, um die Licht-Farbkomponenten für Rot, Grün bzw. Blau einzustellen.

6. Projektions-Bildanzeigegerät nach Anspruch 5, bei dem die Flüssigkristallzellen vom Gast-Wirt-Modustyp sind.

7. Projektions-Bildanzeigegerät nach Anspruch 5 oder Anspruch 6, bei dem die mittlere der drei Flüssigkristallzellen ein magentafarbiges Pigment zum Einstellen der grünen Lichtkomponente enthält, wobei die Brennebene der dritten optischen Einrichtung in der Anzeigeebene der mittleren Flüssigkristallzelle liegt.

**Revendications**

1. Dispositif d'affichage d'images de type à projection qui affiche une image sur un écran (20) en projetant des rayons de lumière, le dispositif d'affichage comprenant:

un dispositif d'affichage de transmission (14) comprenant une matrice de pixels;

une source de lumière (12, 13);

un premier moyen optique (17) situé le long d'un axe optique entre la source de lumière et le dispositif d'affichage de transmission afin de projeter les rayons de lumière issus de la source de lumière et de permettre aux rayons de lumière principaux de pénétrer dans le dispositif d'affichage de transmission en parallèle le long de l'axe optique;

un second moyen optique (18) disposé sur un côté opposé à la source de lumière relativement au dispositif d'affichage de transmission afin de faire converger les rayons de lumière issus du dispositif d'affichage de transmission; et

un troisième moyen optique (19) disposé dans la région du point focal de convergence du second moyen optique afin de projeter sur un écran une image transmise à travers le dispositif d'affichage;

caractérisé par:

ledit dispositif d'affichage de transmission comprenant une pluralité de cellules d'affichage (15, 16) qui fournissent ladite matrice de pixels, les cellules d'affichage étant multicouche dans la direction dans laquelle les rayons de lumière sont conduits à travers le dispositif, chaque cellule d'affichage comprenant deux substrats (21, 22; 23, 24) disposés sur des côtés respectifs d'un plan d'affichage de la cellule; et

pour chaque plan d'affichage, un degré de défocalisation OFD correspondant audit plan d'affichage qui est égal ou inférieur à un pas des pixels du dispositif d'affichage de transmission, le degré de dé-

focalisation étant défini par:

$$OFD = (T/n) \times [(D4/2)/f]$$

où T est une épaisseur ou une épaisseur totale du substrat ou des substrats du dispositif d'affichage de transmission entre un plan focal du troisième moyen optique dans le dispositif d'affichage et ledit plan d'affichage, n est un indice de réfraction du substrat ou des substrats, D4 est un diamètre d'une section d'illumination de la source de lumière, et f est une longueur focale du premier moyen optique (17).

2. Dispositif d'affichage d'images de type à projection selon la revendication 1, dans lequel les cellules d'affichage sont des cellules de cristal liquide de matrice simple, chacune des cellules de cristal liquide de matrice simple étant munie de lignes de balayage, les lignes de balayage des cellules étant placées de façon alternée les unes par rapport aux autres.

3. Dispositif d'affichage d'images de type à projection selon la revendication 1, dans lequel les cellules d'affichage sont des cellules de cristal liquide de matrice active, chacune des cellules de cristal liquide de matrice active étant munie d'électrodes d'élément d'image en tant qu'électrodes d'affichage.

4. Dispositif d'affichage d'images de type à projection selon la revendication 1, dans lequel lesdites cellules d'affichage du dispositif d'affichage de transmission comprend trois cellules de cristal liquide.

5. Dispositif d'affichage d'images de type à projection selon la revendication 4, dans lequel les cellules de cristal liquide modifient la transmission de composantes de lumière correspondant au cyan, au magenta et au jaune, respectivement, pour commander des composantes de couleur de lumière rouge, verte et bleue.

6. Dispositif d'affichage d'images de type à projection selon la revendication 5, dans lequel les cellules de cristal liquide sont de type à mode dichroïque.

7. Dispositif d'affichage d'images de type à projection selon la revendication 5 ou 6, dans lequel une cellule médiane des trois cellules de cristal liquide contient un pigment magenta pour commander une composante de lumière verte, le troisième moyen optique ayant ledit plan focal situé au niveau dudit plan d'affichage de la cellule de cristal liquide médiane.

Fig. 1

# Fig. 2

# Fig. 3

Fig. 4

Fig. 5

# Fig. 6

Prior Art